# EUROPEAN PATENT APPLICATION

(11) **EP 3 236 087 A1**
(43) Date of publication of application: **25.10.2017**
(21) Application number: 17166578.9
(22) Date of filing: 13.04.2017
(51) Int. Cl.: F16B 5/12, F16B 21/09, F21V 21/04, F16B 2/22

(54) **FASTENING DEVICE**

(30) Priority: 21.04.2016 IT IT20162791
(71) Applicant: Advanced Global Solution, AGS SPA, 28100 Novara (IT)
(72) Inventor: PADRIN, Stefano, I-28100 NOVARA (IT)
(74) Representative: Rigamonti, Dorotea

(57) **Abstract**

The present invention describes a **fastening device (1)** adapted to fasten a recessed object (30) to a wall, where said object has at least one through hole (20), said device comprising: a rod (2), a bracket (3) and, preferably, a locking element (4). Systems are also described comprising at least one fastening device (1) and a recessed object and procedures for the installation of said systems.

## Description

The present invention describes a **fastening device (1)** adapted to fasten a recessed object (30) to a wall, where said object has at least one through hole (20), said device comprising: a rod (2), a bracket (3) and, preferably, a locking element (4). Systems are also described comprising at least one fastening device (1) and a recessed object and procedures for the installation of said systems.

### State of the art

In interior furnishing, the need to fasten recessed objects is increasingly felt, whether they are purely decorative or more frequently with a technological content, in cavities obtained in wall paneling or false ceilings. Said objects may be decorative tiles, spotlights, loudspeakers, sensors, monitors for home automation applications.

The rapid technological developments, as well as the change of habits, requires that said objects are removed and replaced with a certain frequency, ideally without the intervention of a skilled worker.

This need is opposed to the requirement that said objects, which may also have a certain weight, are robustly fastened, not exposed to the risk of detachments and therefore accidental falls.

In the state of the art, said objects are typically fastened by resorting to two solutions: spring systems and screw systems.

The use of both systems is not easy for fitters. For example, with a spring system, the operator must be able to hold the springs in position with the fingers until the fitting of the instrument, and then release them so that they may provide the required support. The operation requires a certain expertise and often the operator risks injuring him/herself when performing the same. The solution providing for the use of screws is even more laborious.

The need for a fastening device combining robustness with ease of application and low cost is therefore strongly felt.

### Description of the invention

It is the object of the present invention a **fastening device (1)** adapted to fasten a recessed object (30) to a wall, where said object has at least one through hole (20), said device comprising: a rod (2), a bracket (3) and, preferably, a locking element (4). Systems are also described comprising at least one fastening device (1) and a recessed object and procedures for the installation of said systems.

### Description of the figures

Figures 1, 2, 3, 4: a sequence of application of the fastening device according to the present invention on a false ceiling.
Figure 5: a sectional view of the system according to the present invention installed on a false ceiling.
Figure 6: a fastening device according to the present invention, side view.
Figure 7: a fastening device according to the present invention, top view.

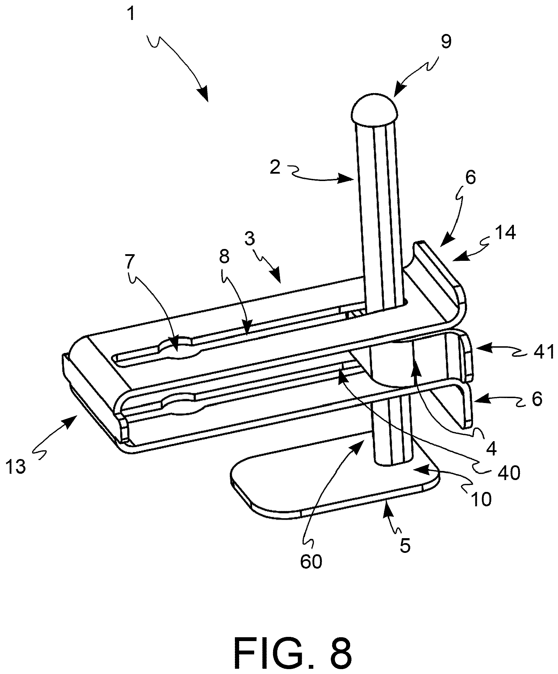

Figure 8: a fastening device according to the present invention, perspective view.
Figure 9: a system comprising fastening devices according to the present invention and a recessed spotlight, top perspective view.
Figure 10: a system comprising fastening devices according to the present invention and a recessed spotlight, perspective view from below.

### Detailed description of the invention:

### Definitions:

For the purposes of the present invention, "wall" means equally a peripheral wall of a room, or the ceiling.

"Wall profile" means the thickness of a plank used in a false ceiling, or of a panel used as a partition wall, or of a partition brick wall. On said plank or panel or brick wall, a hole is performed so that a gap is created thereon, gap that allows to see, along the entire perimeter, said wall profile. In a preferred embodiment, said gap is circular. Said gap creates a cavity within which the recessed object is at least partially accommodated.

The outer side of the wall profile is defined as the face of said wall profile visible in the room in which said wall is located, with inner side towards the wall profile, the opposite face of said wall profile not visible.

"Recessed object" or "object" means a decorative and/or functional object comprising an upright portion (31) and a visible portion (32), where said upright portion has at least one through hole (20). Recessed objects according to the present invention are, by way of example, light points such as spotlights, hanging lamps, ceiling lights, loudspeakers, sensors such as temperature sensors, presence sensors, acoustic detectors, smoke detectors, displays.

"Upright portion" (31) of the decorative and/or functional object means the portion of said object which is recessed into the wall.

"Visible portion" (32) of the decorative and/or functional object means the portion of said object which protrudes towards the room.

### Fastening device, components:

In a preferred embodiment, said fastening device (1) comprises a rod (2), a bracket (3) and, preferably, a locking element (4).

Said **bracket** (3) preferably consists of two portions, an upper one (11) and a lower one (12) joined one another at the distal end (13), so that said bracket may be defined as a U-shaped element. Preferably, at the proximal end (14) of said bracket (3), said upper portion (11) and said lower portion (12) end each with a tab (6), the two tabs (6) being counterposed one another and facing outwards, perpendicular to the bracket itself. Said bracket (3) is characterized by a groove (8) present on almost the entire length of said bracket.

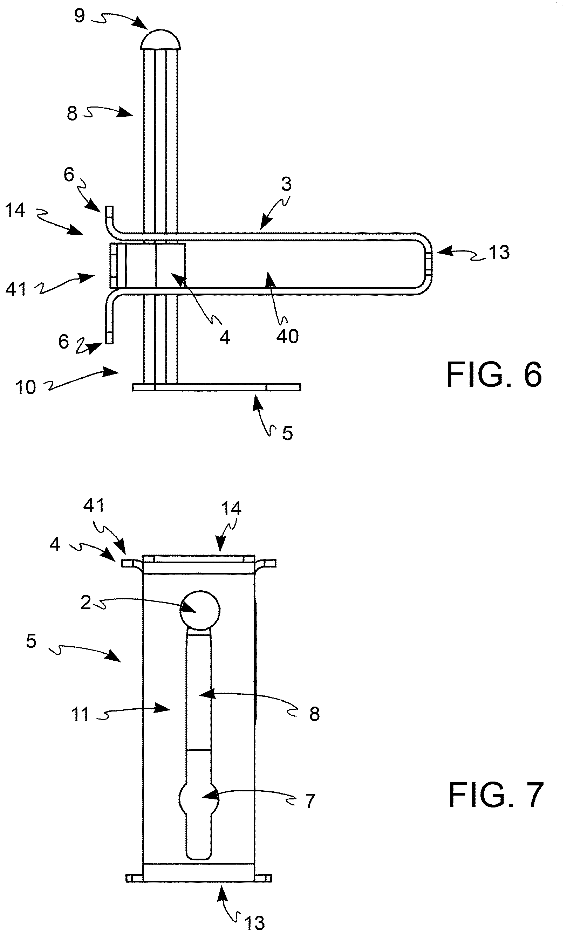

Where said bracket comprises the two portions (11) and (12), said groove (8) is equally present in both, as shown in Figure 7. Said groove (8) widens in a hole (7) in proximity to the distal end (13). Said groove (8) tapers moving from said distal end (13) to said proximal end (14). Preferably, said bracket (3) is of a polymeric material, suitably reinforced. Preferably, the size of said bracket is: length between 20 and 40 mm, preferably about 29.2 mm, width between 7 and 20 mm, preferably about 13 mm, height, i.e. the distance between said upper portion (11) and said lower portion (12), between 2 and 7 mm, preferably about 4.3 mm. Said tabs, where present, extend over the entire width of said bracket and have a height between about 2 and about 6 mm, preferably, a tab is of about 5 mm and the other is of about 3 mm. The measures indicated for the tabs are particularly advantageous in the engagement step with the through hole on the recessed object, having observed that tabs of different height, while ensuring the grip required, fit more easily in the through hole.

Said **rod** (2) has a suitable section for the forced sliding thereof when fitted in any position within the groove (8) and has an upper end (9) of a greater section with respect to said groove (8), but such as to allow engaging said rod (2) in said bracket (3) by means of the passage through the hole (7) having an opening such as to allow the end (9) of said rod (2) to pass. Said rod (2) is provided at the lower end (10) with a base (5) which is preferably a rectangle the size of which is about 10 mm x 15 mm. Said base (5) is perpendicular with respect to the rod (2) and is asymmetrical with respect thereto, where asymmetrical means that said rod is not placed centrally on said base (5), but said rod emerges in proximity of one of the sides of said base (5), preferably said rod emerges at a distance of about 2.5 mm from the short side of the base, where said base is a rectangle having the size indicated above. Preferably, the height of said rod is between 15 and 50 mm, preferably between 20 and 40, even more preferably is about 30 mm. Preferably, said rod is in a ferrous material.

Said **locking element (4)** is also a U-shaped element, preferably in a polymeric material, which is positioned in the space (40) between said upper and lower portions of said bracket (3) and embraces said rod (2) overlooking the proximal end (14) of said bracket (3), where it ends in turn with two tabs (41), adapted to act as a lock.

### Fastening device, assembly:

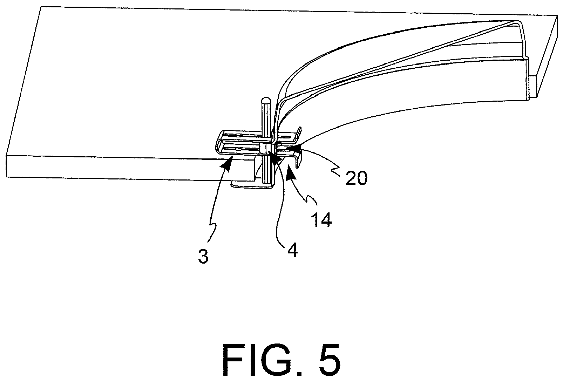

Said rod (2) engages with said bracket (3) fitting therein by means of said hole (7). The base (5) emerges from the rod (2) towards the distal portion of the bracket (3), so that the base (5) is in a lower position and arranged parallel with respect to the bracket (3), as shown in Figures 5 and 6. Said locking element (4) fits into said space (40) with the hollow part facing towards the rod so as to embrace it. When assembled, said device allows the following movements: free sliding of the rod (2) into the hole (7); forced sliding, i.e. applying a certain pressure, of the rod (2) along the groove (8); forced sliding of the rod (2) positioned at a point of said groove (8) from the top downwards, with the end stroke of the rod (2) set in the two directions upwards and downwards from the base (5) and from the end (9), respectively. Said (4) locking element moves integral with the rod (2) when the rod (2) is forcibly slided from the proximal portion to the distal portion of said bracket (3).

### System in use configuration:

It is also part of the present invention a system comprising at least one fastening device (1) according to the present invention and a recessed object (30), as defined above, comprising an upright portion (31) having at least one through hole (20), where the bracket (3) of said fastening device (1) is engaged in said through hole (20), preferably the tabs (6) on said bracket (3) having a greater size than the diameter of said through hole (20) so as to act as knockers on the inner wall of said upright portion. When assembled, said system allows the following movements: sliding of said bracket (3) inwards in said upright portion (31), in the hollow space available for accommodating it, until the rod (2) sliding in the groove (8) reaches the end of stroke, i.e. reaches the distal portion of the groove (8) on the bracket (3); free sliding of the rod (2) into the hole (7); forced sliding of the rod (2) positioned at a point of said groove (8) from the top downwards, as described above.

### Installation procedure:

The installation of recessed objects, that advantageously provides for the fastening device according to the present invention, comprises, in one embodiment, the following steps:
a) Providing at least one fastening device (1) comprising a rod (2) provided at one end with a base (5), a bracket (3) and a locking element (4);
b) Providing a recessed object (30) to be installed, where said object is a decorative and/or functional object having an upright portion (31) and a visible portion (32), where said upright portion has at least one through hole (20);
c) Engaging said bracket (3) with said through hole (20), where the proximal end (14) with the two tabs (6) of said bracket (3) fits in said through hole (20) ;
d) Engaging said locking element (4) with said through hole (20), fitting said locking element (4) in the space (40) within said bracket (3), where said tabs (41) are perpendicular to the tabs (6) and fit in said through hole (20);
e) Pushing said bracket (3) within said upright portion (31), until the hole (7) on said bracket (3) coincides with the gap left by the U of said locking element (4);
f) Fitting the rod (2) in said hole (7) and said locking element (4), ensuring that the end (9) of said rod is facing upwards and the base (5) thereof downwards;
g) Replacing said bracket (3) on the outside of said upright portion, making said rod (2) slide along said groove (8) in said bracket (3);
h) Removing said base (5) from said bracket (3) making said rod (2) slide in said groove (8), so that the distance (60) between the lower portion of the bracket and the base is greater than the wall profile (50);
i) Bringing said bracket (3) partially inwards in said upright portion, typically by making said rod (2) slide in said groove (8) until about halfway through the groove itself;
   Positioning said system on the wall profile (50), entering with said system into the cavity (51) and engaging said device (1) with the wall profile, making the bracket (3) rest on the inner side of said wall profile and pushing said rod (2), exerting a pressure from the bottom upwards on said base (5), until said base (5) comes into contact with the outer side of the wall profile itself, i.e. until the distance (60) is equal to the thickness of the wall profile (50);
j) Returning said bracket (3) on the outside of said upright portion (31), up to the end of stroke.

In a preferred embodiment, said bracket (3) has at the proximal end (14) tabs (6) of a greater size with respect to the gap of said through hole (20). In this embodiment, said bracket (3) may engage with said through hole (20) on said upright portion (31) only by inclining said upright portion (31) in such a manner that the tabs (6) may be introduced in said through hole (20). Bracket (3) and upright portion (31) are thus aligned and, in said aligned position, said upright portion (31) is unable to disengage from said bracket (3), where said tabs (6) act as inner knockers for the upright portion (31).

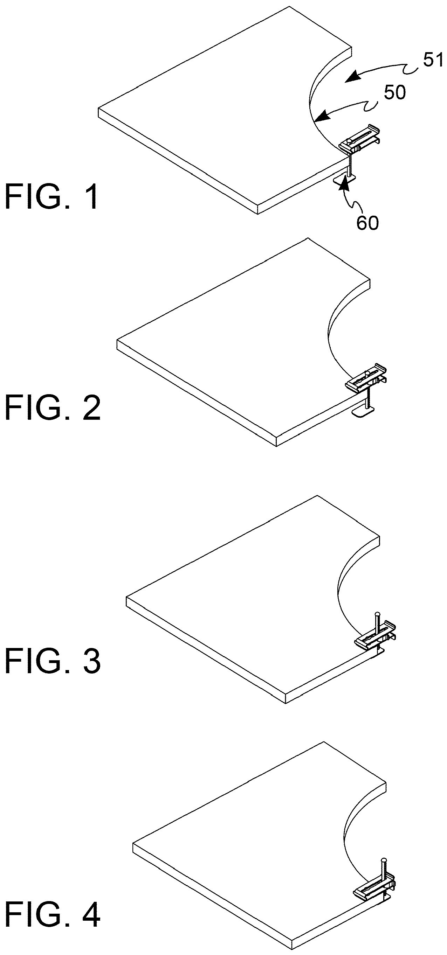

In an alternative embodiment, said installation provides for engaging the fastening device to the wall profile, followed by engaging the recessed object on said device. This embodiment may be advantageously implemented where the gap is sufficient to allow the upright portion of the recessed object to fit on said bracket already placed. In particular, said installation comprises the steps schematically shown in Figures 1 to 4:
a) Providing at least one fastening device (1) comprising a rod (2) provided at one end with a base (5), a bracket (3) and a locking element (4);
b) Providing a recessed object (30) to be installed, where said object is a decorative and/or functional object having an upright portion (31) and a visible portion (32), where said upright portion has at least one through hole (20);
c) Positioning said fastening device (1) on the wall profile (50), as shown in Figure 1, i.e. entering the cavity (51) with said device (1), with the end (9) of the rod (2) facing inwards and the base (5) thereof facing outwards;
d) Forcibly pushing said rod (2) along the groove (8) on said bracket (3) so that the distal portion of the bracket (3) is positioned above said wall profile (50) and said base (5) is below the same profile (Figure 2);
e) Engaging said device (1) with the wall profile, making the lower portion of the bracket (3) rest on the inner side of said wall profile and pushing said rod (2) from the bottom upwards, exerting a pressure on said base (5), until said base (5) comes into contact with the outer side of the same wall profile (50), as shown in Figures 3 - 4;
f) Engaging the tabs (6) on the proximal end (14) of said bracket (3) and the tabs (41) of the locking element (4) with said through hole (20);
g) Possibly, completing the pushing of said rod (2) along said groove (8) according to the size of the upright portion of the recessed object.

It should be understood that the procedures described above apply in the same way where the object is to be positioned on a vertical wall, suitably replacing top and bottom with distal and proximal.

For the disassembly, it is sufficient to make the bracket (3) slide inwards in the upright portion (31) until the rod (2) is at the hole (7), within the hole (7) the rod (2) slides freely and is therefore released, thus allowing the extraction of the object.

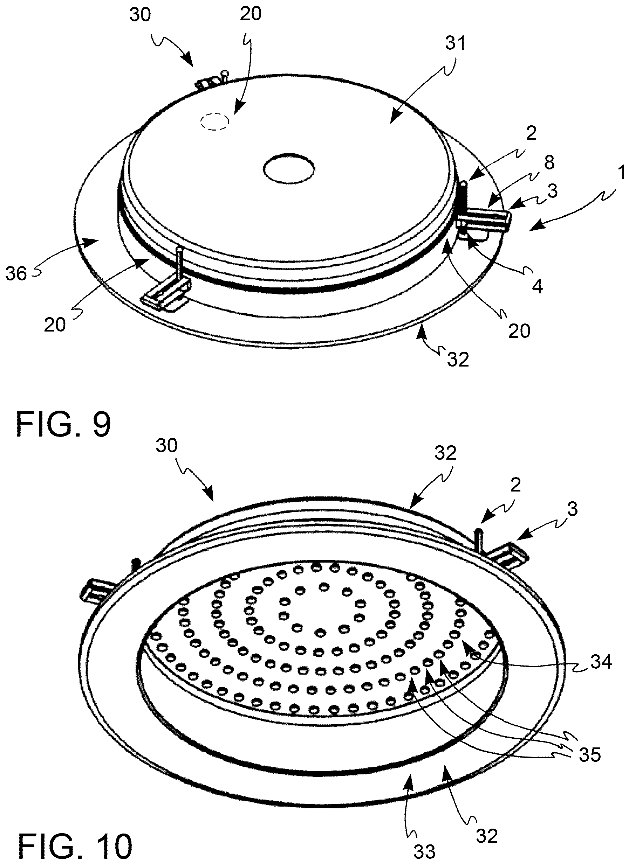

In a preferred embodiment, said recessed object is a spotlight. Purely by way of example, a spotlight is hereinafter described to be used in combination with the fastening device claimed herein. The spotlight shown in Figures 9 and 10, is by no means to be considered limiting for the objects of the present invention, where said fastening device is clearly suitable for any recessed object, where the same is provided with at least one through hole for the fitting therein of said fastening device.

The spotlight of Figure 9 has an upright portion (31) and a visible portion (32), on said upright portion being present three through holes (20) adapted to engage with said fastening device (1). Said through holes (20) are preferably of a rectangular shape. The visible portion (32) comprises a circular crown (33) which, when said spotlight is recessed, is in proximity of the outer side of the wall on which said spotlight was installed and a built in portion (34), on which LEDs are positioned (35). Said spotlight is particularly advantageous when installed with the fastening device according to the present invention since said built in portion is located in the cavity of the wall and on said circular crown, on the inner face (36), not visible from the room in which said spotlight is installed, the base (5) of said rod (2) rests, so that the base (5) is not visible from the room in which said spotlight is installed.

Preferably, the fastening devices, and consequently the through holes on said upright portion, required to assemble a recessed object such as a spotlight or a sensor, are two.

For heavier objects, said fastening devices are used in a greater number.

The fastening device according to the present invention advantageously offers the possibility to assemble and disassemble recessed objects with ease, from both vertical and horizontal walls, without the need to use tools, without risks for the operator, with an easily repeatable procedure.

The system is adaptable to any recessed object, provided that this presents an upright portion having a through hole (20) of size sufficient to engage with the proximal portion of the bracket (3) of the device. In a preferred embodiment, said through hole (20) is a rectangular through hole with sides of about 6 - 20 mm by 3 - 13 mm, even more preferably of about 8 - 12 mm by about 4 - 7 mm, even more preferably of about 10 mm by about 5.6 mm. In a preferred embodiment, said visible portion (32) of said recessed object (30) has an area which is a magnet, in particular the area which, when placed at work, is adjacent to the gap on the wall profile and comes into contact with the outer side of said wall profile, where the base (5) of said device (1) is, is a magnet. In this embodiment, said base (5) is advantageously made of iron so that the visible portion of the recessed object, by means of the suitably positioned magnet, contributes to the stability of the object itself.

## Claims

1. A **fastening device** (1) adapted to fasten recessed objects (30) on a wall or a ceiling, wherein said fastening device (1) comprises a rod (2) ending at one end with a base (5) perpendicular to the rod itself, a bracket (3) and, preferably, a locking element (4).

2. A fastening device (1) according to claim 1, wherein said bracket (3) has a proximal end (14) and a distal end (13) and is **characterized by** a groove (8) present on almost the entire length of said bracket, wherein said groove (8) widens in a hole (7) in proximity to said distal end (13), wherein said rod (2) fits in said hole (7) on said bracket (3).

3. A device according to one of claims 1 or 2, wherein said bracket consists of two portions, an upper portion (11) and a lower portion (12), joined one another at the distal end (13), said upper portion (11) and said lower portion (12) ending at the proximal end (14) each with a tab (6), the two tabs (6) being counterposed one another and facing outwards, perpendicular to the bracket itself.

4. A device according to one of claims 1 to 3, wherein said **rod** (2) has an upper end (9) of a greater section with respect to said groove (8) and smaller with respect to said hole (7), wherein said base (5) is a rectangle and said rod (2) emerges in proximity of one of the sides of said base (5).

5. A device according to one of claims 1 to 4, wherein said **locking element (4)** is a U-shaped element which is positioned in the space (40) between said upper and lower portions of said bracket (3) and embraces said rod (2) overlooking the proximal end (14) of said bracket (3), where it ends in turn with two tabs (41).

6. A device according to one of claims 1 to 5, wherein said bracket (3) has a length between 20 and 40 mm, preferably about 29.2 mm, a width between 7 and 20 mm, preferably about 13 mm, a height, i.e. a distance between said upper portion (11) and said lower portion (12), between 2 and 7 mm, preferably about 4.3 mm, said rod (2) has a height between 15 and 50 mm, preferably between 20 and 40, even more preferably, is about 30 mm, said base is a rectangle of about 10 mm x 15 mm.

7. A system comprising at least one fastening device (1) according to one of claims 1 to 6 and a recessed object (30), wherein said recessed object (30) comprises an upright portion (31) having at least one through hole (20) and a visible portion (32), wherein the bracket (3) of said fastening device (1) is engaged in said through hole (20), preferably the tabs (6) on said bracket (3) having a greater size than the diameter of said through hole (20).

8. A system according to claim 7, wherein said visible portion (32) of said recessed object (30) has an area which is a magnet, in particular the area which, when placed at work, is adjacent to the gap on the wall profile and comes into contact with the outer side of said wall profile, where the base (5) of said device (1) which is made of iron is, is a magnet.

9. A system according to one of claims 7 or 8, wherein said recessed object (30) is a spotlight having an upright portion (31) and a visible portion (32), on said upright portion (31) being present three through holes (20) adapted to engage with said fastening device (1), wherein said through holes (20) are preferably of a rectangular shape and said visible portion (32) comprises a circular crown (33) which, when said spotlight is recessed, is in proximity of the outer side of the wall on which said spotlight was installed and a built in portion (34), on which LEDs are positioned (35).

10. A system according to one of claims 7 to 9, wherein said through hole (20) on said upright portion is a rectangular through hole with sides of about 6 - 20 mm by 3 - 13 mm, preferably of about 8 - 12 mm by about 4 - 7 mm, even more preferably of about 10 mm by about 5.6 mm.
